**Europäisches Patentamt**

**European Patent Office**

**Office européen des brevets**

(11) Veröffentlichungsnummer: **0 326 626**
**A1**

## (12) EUROPÄISCHE PATENTANMELDUNG

(21) Anmeldenummer: **88101391.6**

(22) Anmeldetag: **01.02.88**

(51) Int. Cl.⁴: **A01K 83/00 , A01K 97/06**

(43) Veröffentlichungstag der Anmeldung:
**09.08.89 Patentblatt 89/32**

(84) Benannte Vertragsstaaten:
**AT BE CH DE ES FR GB IT LI NL SE**

(71) Anmelder: **Schorat, Wolfgang**
**Tannenweg 19**
**D-8000 München 50(DE)**

(72) Erfinder: **Schorat, Wolfgang**
**Tannenweg 19**
**D-8000 München 50(DE)**

(54) **Schutzkappe für Drillinge.**

(57) Bei dieser Schutzkappe ist eine relativ flexible Plastikmasse so geformt das sie die Konturen eines Angeldrillings aufnehmen kann. Die Schutzkappe ist so geformt das der Drilling völlieg in der Kappe steckt um sämtliche Verletzungsmöglichkeiten ,und das sons üblich ineinander verhaken und schlecht auseinanderbekommen der Drillinge, zu verhindern. Seitenhalterungen,Noppen (2) sorgen dafür das die Drillinge in Position bleiben ohne herauszufallen. Das ist Nötieg da die Schutzkappe vier verschidene Drillingsgrößen Schutz bieten soll.Was wiederum zur Reduzierung der Herstellungsmenge der Schutzkappengrößen Dient,um sämtliche Drillingsgrößen zu schützen.

Eine Öffnung am Boden der Schutzkappe sorgt dafür das Feuchtiegkeit vom Drilling schneller verdunstet.

SCHUTZKAPPE FÜR ANGELDRILLINGE

ANSICHT X

SCHNITT A-A

EP 0 326 626 A1

## Schutzkappe für Angeldrillinge

Die Erfindung bezieht sich auf eine Schutzkappe für Angeldrillinge.Diese Schutzkappe wird auf den Drilling gesteckt,oder der Drilling in die Schutzkappe.

Die Schutzkappe schützt den Angler oder Berufsfischer vor möglichen Verletzungen.Sie entwirrt die Kunstköder die mit Drillingen bestückt sind und lose in der Angelbox liegen und sich dadurch ineiander verhaken.Da nun mit der Schutzkappe kein ineinander verhaken mehr möglich ist.Auch kann der Angler nun seine Kunstköder mit Drillingshaken lose in der jackentasche tragen.

Eine solche Schutzkappe ist zur bisherigen Zeit nicht auf dem Deutschen Markt zu finden.Dabei ist zum Beispiel das Nachforschen in Angelgeräte-Katalogen oder Angelläden zu erwähnen.

Im folgenden wird die Erfindung anhand Ansichten und einem Schnitt in der darstellenden Zeichnung näher erläutert.Sie zeigt in Absicht "X" no (1) eine Öffnung im Boden der Schutzkappe die dafür sorgen soll das genügend Ventilation zur schnellen Trocknung des eingesteckten Drillings vorhanden ist. In Schnitt A-A no (2) wird gezeigt das nahe dem Boden der Schutzkappe zwei Noppen stehen die dafür sorgen sollen das die Drillingshaken nicht aus der Schutzkappe fallen können.

Die Schutzkappe ist so Konstruiert, das sie jeweils 4 verschiedene Drillingshaken aufnehmen kann.

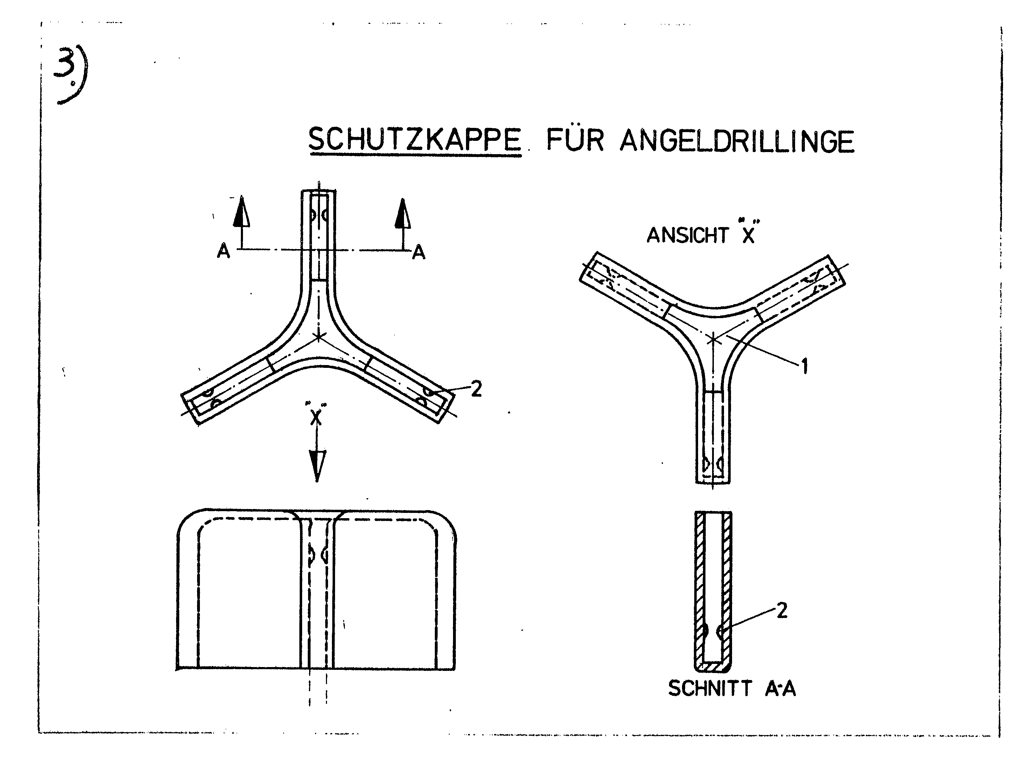

## Ansprüche

Schutzkappe für Angeldrillinge,aus einem geformten Plastikteil bestehend,das so geformt ist,um die Drillingskonturen zu umschließen,der in diese geformte Schutzkappe hineingesteckt wird. Dabei sind die Noppen an den Seitenwänden zur Festhaltung des Drillings konstruiert.Damit die Möglichkeit besteht verschidene Größen von Drillingen in einer Schutzkappengröße aufzunehmen.Das soll die Schutzkappengrößen reduzieren,die gebraucht sind um Drillingsgrößen zu schützen.

In diesen falle nimmt eine Schutzkappe 4 verschidene Drillingsgrößen auf.

Das Bodenloch (1) läßt Feuchtiegkeit schneller entweichen und schützt Drillinge vor dem Rosten. Die Noppen(2) schützen vor dem herausfallen der Drillinge.

3)

# SCHUTZKAPPE FÜR ANGELDRILLINGE

A ——— A

2

ANSICHT "X"

1

"X"

2

SCHNITT A·A

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 704 358 (DEMETER) <br> * Insgesamt * <br> --- | 1 | A 01 K 83/00 <br> A 01 K 97/06 |
| X | CH-A- 277 551 (HUBBARD) <br> * Insgesamt * <br> --- | 1 | |
| X | US-A-2 703 467 (SHEPHERD) <br> * Insgesamt * <br> --- | 1 | |
| X | FR-A-1 491 507 (ALBARRANC) <br> * Insgesamt * <br> --- | 1 | |
| X | US-A-4 614 054 (FOVENYESSY) <br> * Insgesamt * <br> --- | 1 | |
| A | US-A-3 331 152 (STARRETT) <br> --- | | |
| A | FR-A-1 142 119 (BONN) <br> --- | | |
| A | US-A-2 932 118 (JEND) <br> ----- | | |

**RECHERCHIERTE SACHGEBIETE (Int. Cl.4)**

A 01 K

Der vorliegende Recherchenbericht wurde für alle Patentansprüche erstellt

| Recherchenort | Abschlußdatum der Recherche | Prüfer |
|---|---|---|
| DEN HAAG | 03-10-1988 | VERDOODT S.J.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
....................................................................
& : Mitglied der gleichen Patentfamilie, übereinstimmendes
    Dokument

EPO FORM 1503 03.82 (P0403)